# EUROPEAN PATENT APPLICATION

(11) **EP 4 525 314 A1**
(43) Date of publication of application: **19.03.2025**
(21) Application number: 24197007.8
(22) Date of filing: 28.08.2024
(51) Int. Cl.: H04B 1/00, H04B 1/18, H04B 1/44, H04B 1/48

(54) **ADAPTIVE RADIO FREQUENCY FRONT-END CIRCUIT WITH LOW INSERTION LOSS FOR WLAN**

(30) Priority: 18.09.2023 US 202363583322 P; 25.08.2024 US 202418814570
(71) Applicant: MediaTek Inc., Hsin-Chu 300 (TW)
(72) Inventor: CHANG, Yu-Hsien, San Jose, 95134 (US); SHANAA, Osama, Khalil, San Jose, 95134 (US); SHI, Yan, San Jose, 95134 (US)
(74) Representative: Haseltine Lake Kempner LLP

(57) **Abstract**

A radio frequency (RF) front-end circuit has a multi-way switch, an output terminal, and a shunt circuit. The multi-way switch has an input end, a plurality of output ends, and a control end. The input end is coupled to an antenna for receiving a radio frequency signal from the antenna. The control end is used to couple the input end to one of the output ends according to a switch control signal. The shunt circuit is coupled between the multi-way switch and the output terminal to provide one of shunt paths according to the switch control signal. The shunt paths correspond to different amounts of rejection to the radio frequency signal.

## Description

This application claims the benefit of U.S. Provisional Application No. 63/583,322, filed on September 18th, 2023. The content of the application is incorporated herein by reference.

### Background

The background description provided herein serves the purpose of generally presenting the context of the disclosure. The work of the presently named inventors, to the extent it is described in this background section, as well as aspects of the description that may not qualify as prior art at the time of filing, are neither expressly nor impliedly admitted as prior art against the present invention.

In the modern era, the proliferation of wireless devices, such as smartphones, laptops, and Internet of Things (IoT) devices, has led to a significant increase in the integration of various radio protocols, including Cellular, Wi-Fi, Bluetooth Low Energy (BLE), and others. This compact integration presents a significant challenge: enabling multiple radios to operate concurrently without interfering with each other, especially when they are physically close within the device or occupy channels in close proximity in the spectrum. This phenomenon is referred to as wireless coexistence.

In the RF front-end architecture, the RF filter, typically a band-pass filter (BPF), plays a pivotal role. It filters out the strong out-of-band interference, known as the aggressor band, preventing it from saturating the receiver. This is particularly crucial for bands that are close in frequency to the desired band, termed the victim band.

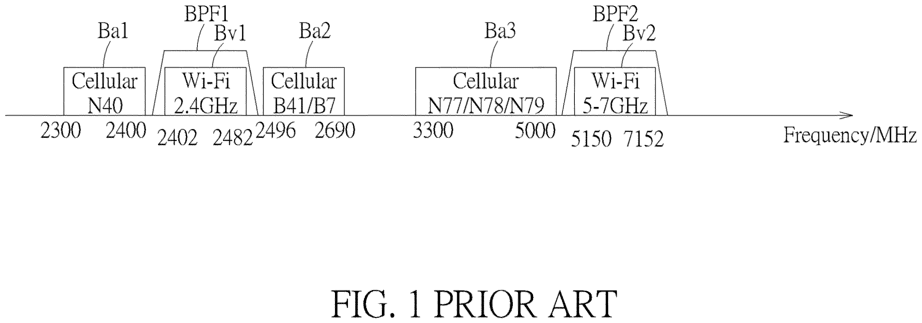

FIG. 1 shows a spectrum of two victim bands Bv1 and Bv2, and three aggressor bands Ba1-Ba3 used in a wireless device with Wi-Fi function. The wireless device may have two Wi-Fi modules. One of the two Wi-Fi modules uses the victim band Bv1 to transmit and receive data and signals and has a band-pass filter with band BPF1 to filter out the aggressor bands Ba1 and Ba2. The other Wi-Fi module uses the victim band Bv2 to transmit and receive data and signals and has another band-pass filter with band BPF2 to filter out the aggressor band Ba3. The aggressor bands Ba1-Ba3 are used by one or more cellular modules (e.g., fourth generation (4G) and/or 5th generation (5G) wireless modules) of the wireless device to transmit and receive data and signals. The aggressor band Ba1 may contain N40 band defined in Long Term Evolution (LTE) frequency bands, the aggressor band Ba2 may contain B41 and B7 bands defined in the LTE frequency bands, and the aggressor band Ba3 may contain N77, N78, and N79 bands defined in the 5G New Radio (5G NR) frequency bands. The frequency range of the victim band Bv1 may be between 2402 MHz and 2482 MHz, and the frequency range of the victim band Bv2 may be between 5150 MHz and 7152 MHz. The band-pass filters BPF1 and BPF2 respectively cover the victim band Bv1 and the victim band Bv2. The frequency range of the aggressor band Ba1 may be between 2300 MHz and 2400 MHz, the frequency range of the aggressor band Ba2 may be between 2496 MHz and 2690 MHz, and the frequency range of the aggressor band Ba3 may be between 3300 MHz and 5000 MHz.

In a wireless local area network (WLAN) (e.g., Wi-Fi) system, both the transmitter (TX) and receiver (RX) can utilize the RF filter to eliminate unwanted aggressor bands, such as Ba1-Ba3. However, it often poses a challenge to remove aggressor bands that are located in close proximity to the victim band (e.g., Bv1 or Bv2) in the spectrum. As a result, the RF filters in the WLAN system are designed with a high quality factor (Q) to provide significant rejection of these close-in aggressors.

As the Q value of the RF filter increases, the filter's selectivity curve becomes narrower, leading to a higher rejection of nearby aggressor bands. However, this improvement comes with a trade-off: a relatively higher in-band insertion loss. While the high-Q filter allows the wireless system to operate with significantly reduced interference, the substantial insertion loss can degrade the power of the desired signal from the transmitter by reducing the total front-end gain. It can also impair the receiver's sensitivity by attenuating the level of the received signal.

The design of the RF front-end necessitates a high-Q filter with substantial rejection to eliminate the nearby aggressor band. However, the introduced high insertion loss is undesirable for common coexistence scenarios where the aggressor band is not in close proximity to the victim band in the spectrum. For example, in the case of B34 (i.e., 2010-2025MHz), it is indeed far from the victim band Bv1. The separation frequency of around 400MHz between B34 and Bv1 typically results in high isolation, thus eliminating the need for a band-pass filter (BPF) to provide extra rejection. The high insertion loss of the BPF would only degrade the performance of the wireless system. Moreover, traditional front-end architectures typically have a fixed filter position to address all coexistence scenarios, regardless of whether the aggressor band is close to the victim band. Most of the time, the aggressor bands are not necessarily close to the victim bands, which do not require high filter rejection. In these cases, the high-Q filter is overkill and results in additional insertion loss (1dB to 3.8dB), which degrades the transmitter and receiver performances. For instance, at a given moment, the wireless device uses the victim band Bv1 and the aggressor band Ba3, while it does not use the victim band Bv2 and the aggressor bands Ba1 and Ba2. Since the aggressor band Ba3 is far away from the victim band Bv1, neither of the two band-pass filters with bands BPF1 and BPF2 is needed. In such a case, if the band-pass filter with band BPF1 is used, the victim band Bv1 would suffer from rejection. Consequently, the insertion loss of the RF front-end of the wireless device increases, and the power of the desired signal within the victim band Bv1 decreases.

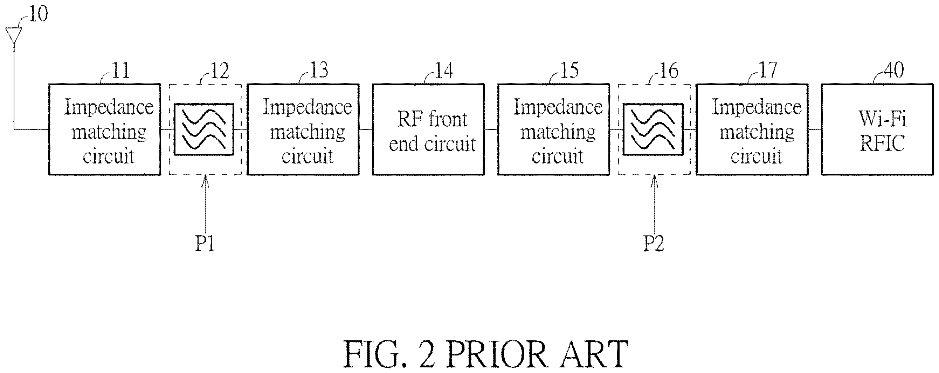

In addition, conventional WLAN RF front-end designs position the filters in fixed locations. FIG. 2 is a block diagram of a transceiver of a prior art WLAN (e.g., Wi-Fi) device. The transceiver comprises an antenna 10, an RF front-end circuit 14, two band-pass filters 12 and 16, four impedance matching circuits 11, 13, 15, and 17, and a Wi-Fi radio frequency integrated circuit (Wi-Fi RFIC) 40. The Wi-Fi RFIC 40 is utilized to process RF signals received from the antenna 10. The band-pass filters 12 and 16 are fixed at locations P1 and P2, respectively. Two impedance matching circuits 11 and 13 are employed for the band-pass filter 12 to match the impedance with the antenna 10 and the RF front-end circuit 14, and the other two impedance matching circuits 15 and 17 are employed for the band-pass filter 16 to match the impedance with the RF front-end circuit 14 and the Wi-Fi RFIC 40. When the RF signals received from the antenna 10 are transmitted to the Wi-Fi RFIC 40, the received RF signals must pass through the two band-pass filters 12 and 16. Therefore, the received RF signals would experience insertion loss even when the transceiver is in common coexistence scenarios where the aggressor band is not in close proximity to the victim band in the spectrum.

In some conventional WLAN RF front-end designs, a transceiver may only have a single band-pass filter fixed at the location P1 or P2. In such a case, the transceiver also needs three impedance matching circuits. In detail, if the band-pass filter is fixed at the location P1, the two impedance matching circuits 11 and 13 and an additional impedance matching circuit positioned between the RF front-end circuit 14 and the Wi-Fi RFIC 40 are needed. If the band-pass filter is fixed at the location P2, the two impedance matching circuits 15 and 16 and an additional impedance matching circuit positioned between the RF front-end circuit 14 and the antenna 10 are needed.

### Summary

In an embodiment of the present invention, a radio frequency (RF) front-end circuit is disclosed. The RF front-end circuit comprises a multi-way switch, an output terminal, and a shunt circuit. The multi-way switch comprises an input end, a plurality of output ends, and a control end. The input end is coupled to an antenna and configured to receive a radio frequency signal from the antenna. The control end is configured to couple the input end to one of the output ends according to a switch control signal. The shunt circuit is coupled between the multi-way switch and the output terminal. When the input end of the multi-way switch is coupled to a first output end of the output ends of the multi-way switch, the shunt circuit provides a first shunt path between the first output end and the output terminal with first rejection to the radio frequency signal. When the input end of the multi-way switch is coupled to a second output end of the output ends of the multi-way switch, the shunt circuit provides a second shunt path between the second output end and the output terminal with second rejection to the radio frequency signal. The second rejection is greater than the first rejection. When the input end of the multi-way switch is coupled to a third output end of the output ends of the multi-way switch, the shunt circuit provides a third shunt path between the third output end and the output terminal with third rejection to the radio frequency signal. The third rejection is greater than the second rejection.

These and other objectives of the present invention will no doubt become obvious to those of ordinary skill in the art after reading the following detailed description of the preferred embodiment that is illustrated in the various figures and drawings.

### Brief Description of the Drawings

FIG. 1 shows a spectrum of two victim bands and three aggressor bands used in a wireless device with Wi-Fi function.
FIG. 2 is a block diagram of a transceiver of a prior art WLAN device.
FIG. 3 is a schematic diagram of a wireless transceiver with a radio frequency (RF) front-end circuit, constructed according to an embodiment of the present invention.
FIGs. 4-7 are schematic diagrams of a wireless transceiver featuring the RF front-end circuit 100, according to different embodiments of the present invention.

### Detailed Description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The present invention offers various radio frequency (RF) front-end circuits in different embodiments. For a comprehensive understanding of the invention, it is assumed that a wireless device, which integrates any one of the RF front-end circuits of the present invention, utilizes the two victim bands Bv1 and Bv2 and the three aggressor bands Ba1-Ba3 as depicted in FIG. 1. The coexistence scenarios for the wireless device using these bands can be classified into critical and non-critical scenarios. Critical scenarios encompass two specific situations, while all others are considered non-critical. The first critical scenario occurs when the wireless device uses the victim band Bv1 and at least one of the aggressor bands Ba1 and Ba2. The second critical scenario occurs when the wireless device uses the victim band Bv2 and at least one aggressor band close in frequency to the victim band Bv2 (e.g., the aggressor band Ba3). These two scenarios are deemed critical due to the small frequency offsets between the victim band Bv1 and the aggressor bands Ba1 and Ba2, as well as between the victim band Bv2 and the aggressor band Ba3. These two critical scenarios, along with the non-critical scenarios, will be utilized in the subsequent description.

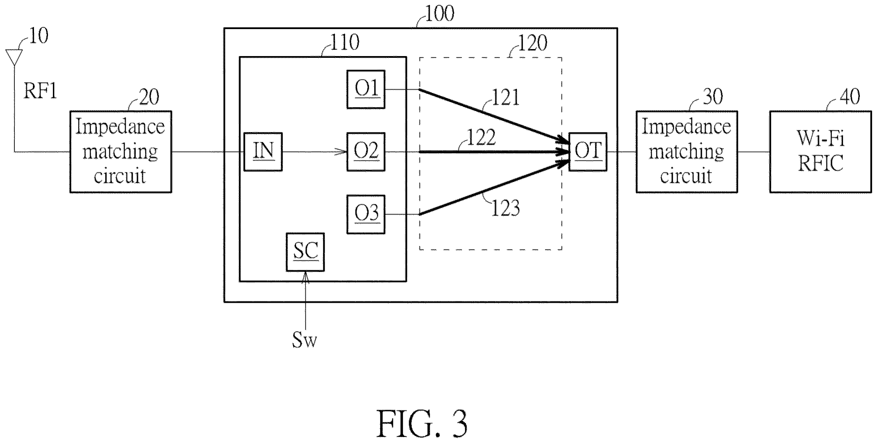

FIG. 3 is a schematic diagram of a wireless transceiver with a radio frequency (RF) front-end circuit 100, constructed according to an embodiment of the present invention. The wireless transceiver may be integrated in a wireless device and comprises an antenna 10, an impedance matching circuit 20, the RF front-end circuit 100, an impedance matching circuit 30, and a Wi-Fi radio frequency integrated circuit (Wi-Fi RFIC) 40. The Wi-Fi RFIC 40 is configured to process RF signals (e.g., an RF signal RF1) received from the antenna 10, and configured to transmit signals through the impedance matching circuit 30, the RF front-end circuit 100, and the impedance matching circuit 20 to the antenna 10. The impedance matching circuit 20 is used for the RF front-end circuit 100 to match the impedance with the antenna 10, and the impedance matching circuit 30 is used for the RF front-end circuit 100 to match the impedance with the Wi-Fi RFIC 40. The RF front-end circuit 100 comprises a multi-way switch 110, an output terminal OT, and a shunt circuit 120. In the embodiment, the multi-way switch 110 is a three-way switch (i.e., SP3T) and comprises an input end IN, three output ends O1 to O3, and a control end SC. The input end IN is coupled to the antenna 10 and configured to receive RF signals (e.g., the RF signal RF1) from the antenna 10. The control end SC is configured to couple the input end IN to one of the output ends O1 to O3 according to a switch control signal Sw. The switch control signal Sw may be generated by a wireless device (e.g., smartphone, laptop, IoT device, etc.) in which the RF front-end circuit 100 is integrated.

The shunt circuit 120 is coupled between the multi-way switch 110 and the output terminal OT. When the input end IN of the multi-way switch 110 is coupled to the output end O1, the shunt circuit 120 provides a first shunt path 121 between the output end O1 and the output terminal OT with first rejection to the RF signal RF1. When the input end IN of the multi-way switch 110 is coupled to the output end O2, the shunt circuit 120 provides a second shunt path 122 between the output end O2 and the output terminal OT with second rejection to the RF signal RF1. The second rejection is greater than the first rejection. In other words, if the first shunt path 121 introduces a first insertion loss of the RF signal RF1, and the second shunt path 122 introduces a second insertion loss of the RF signal RF1, the second insertion loss is greater than the first insertion loss. The amount of power the RF signal RF1 loses as the RF signal RF1 travels through the second shunt path 122 is greater than the amount of power the RF signal RF1 loses as the RF signal RF1 travels through the first shunt path 121.

When the input end IN of the multi-way switch 110 is coupled to the output end O3, the shunt circuit 120 provides a third shunt path 123 between the output end O3 and the output terminal OT with third rejection to the RF signal RF1. The third rejection is greater than the second rejection. In other words, if the third shunt path 123 introduces a third insertion loss of the RF signal RF1, and the second shunt path 122 introduces a second insertion loss of the RF signal RF1, the third insertion loss is greater than the second insertion loss. The amount of power the RF signal RF1 loses as the RF signal RF1 travels through the third shunt path 123 is greater than the amount of power the RF signal RF1 loses as the RF signal RF1 travels through the second shunt path 122.

The first shunt path 121 can serve as a bypass path, resulting in the first rejection being extremely low (i.e., nearly zero). Therefore, the first shunt path 121 is suitable for non-critical scenarios. Conversely, the second shunt path 122 and the third shunt path 123 are appropriate for critical scenarios.

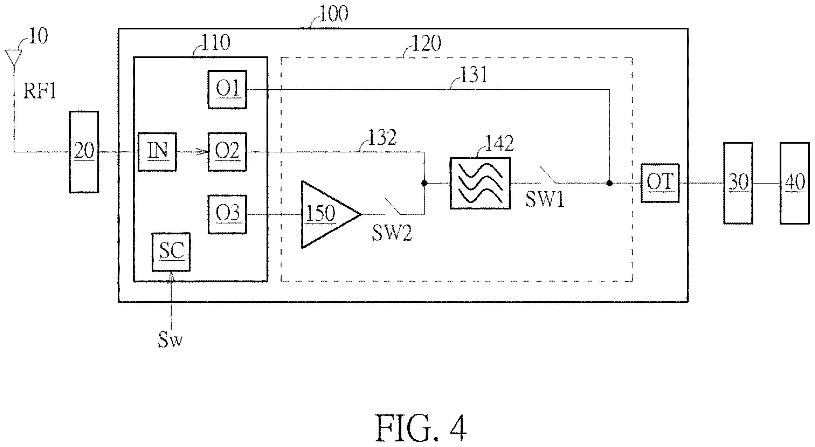

FIG. 4 is a schematic diagram of a wireless transceiver featuring the RF front-end circuit 100, according to another embodiment of the present invention. In this embodiment, the shunt circuit 120 comprises a trace 131, a switch SW1, a common band pass filter 142, a trace 132, a switch SW2, and a low noise amplifier (LNA) 150. The trace 131 is formed on the first shunt path 121 and is used when the input end IN is coupled to the output end O1. The common band pass filter 142 is coupled between the trace 132 and the switch SW1. The trace 132 is coupled between the output end O2 and the common band pass filter 142. An input end of the LNA 150 is coupled to the output end O3, and an output end of the LNA 150 is coupled to the switch SW2. When the input end IN is coupled to the output end O2, the switch SW1 is turned on and the switch SW2 is turned off, such that the trace 132, the common band pass filter 142, and the switch SW1 form the second shunt path 122. When the input end IN is coupled to the output end O3, the switches SW1 and SW2 are turned on, such that the LNA 150, the switch SW2, the common band pass filter 142, and the switch SW1 form the third shunt path 123. In short, in the embodiment, the first shunt path 121 (i.e., the trace 131) is a bypass path. The trace 132, the common band pass filter 142 and the switch SW1 are formed on the second shunt path 122. The LNA 150, the switch SW2, the common band pass filter 142 and the switch SW1 are formed on the third shunt path 123. In the embodiment, the first shunt path 121 serves as a bypass path with low insertion loss and is suitable for non-critical scenarios. The second shunt path 122 is suitable for critical scenarios when the wireless transceiver is in transmitter mode. The third shunt path 123 is suitable for critical scenarios when the wireless transceiver is in receiver mode. The gain of the LNA 150 can overcome the filter loss.

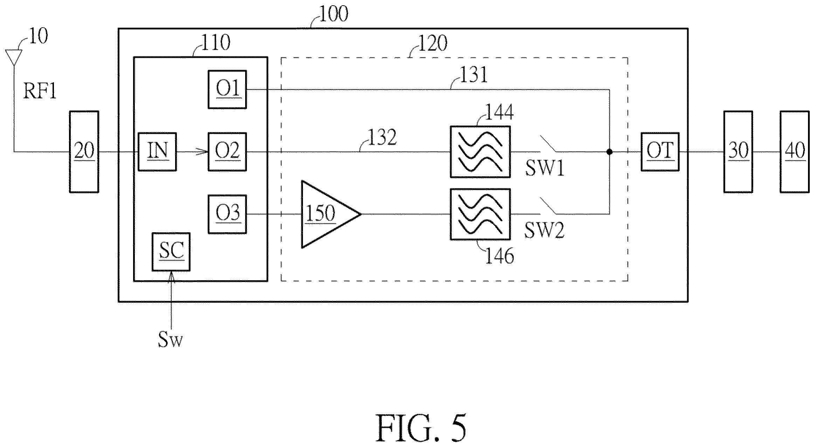

FIG. 5 is a schematic diagram of a wireless transceiver featuring the RF front-end circuit 100, according to another embodiment of the present invention. In this embodiment, the shunt circuit 120 comprises a trace 131, a switch SW1, a first band pass filter 144, a trace 132, a switch SW2, a second band pass filter 146, and a low noise amplifier (LNA) 150. The trace 131 is formed on the first shunt path 121 and is used when the input end IN is coupled to the output end O1. The first band pass filter 144 is coupled between the trace 132 and the switch SW1. The second band pass filter 146 is coupled between the LNA 150 and the switch SW2. The input end of the LNA 150 is coupled to the output end O3, and the output end of the LNA 150 is coupled to the second band pass filter 146. When the input end IN is coupled to the output end O2, the switch SW1 is turned on and the switch SW2 is turned off, such that the trace 132, the first band pass filter 144, and the switch SW1 form the second shunt path 122. When the input end IN is coupled to the output end O3, the switch SW2 is turned on and the switch SW1 is turned off, such that the LNA 150, the second band pass filter 146, and the switch SW2 form the third shunt path 123. In short, in the embodiment, the first shunt path 121 (i.e., the trace 131) is a bypass path. The trace 132, the first band pass filter 144 and the switch SW1 are formed on the second shunt path 122. The LNA 150, the second band pass filter 146 and the switch SW2 are formed on the third shunt path 123. The first shunt path 121 serves as a bypass path with low insertion loss and is suitable for non-critical scenarios. The second shunt path 122 is suitable for critical scenarios when the wireless transceiver is in transmitter mode. The third shunt path 123 is suitable for critical scenarios when the wireless transceiver is in receiver mode. The gain of the LNA 150 can overcome the filter loss.

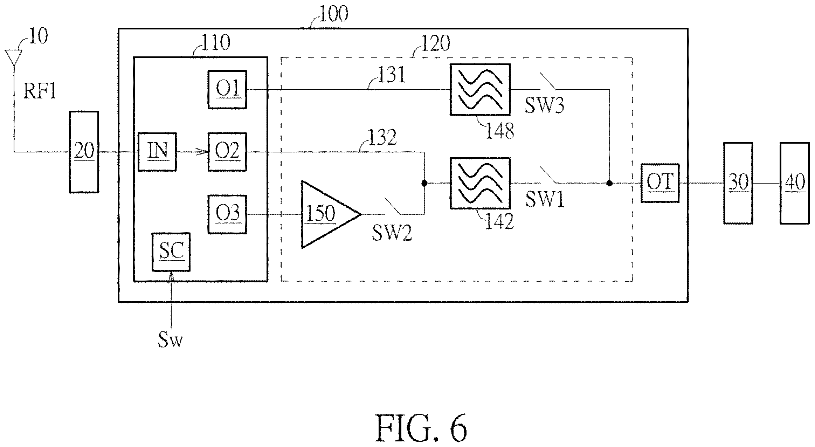

FIG. 6 is a schematic diagram of a wireless transceiver featuring the RF front-end circuit 100, according to another embodiment of the present invention. In this embodiment, the shunt circuit 120 comprises a trace 131, a band pass filter 148, a switch SW3, a switch SW1, a common band pass filter 142, a trace 132, a switch SW2, and a low noise amplifier (LNA) 150. The band pass filter 148 is coupled between the output end O1 and the output terminal OT via the trace 131 and the switch SW3. The common band pass filter 142 is coupled between the trace 132 and the switch SW1. The trace 132 is coupled between the output end O2 and the common band pass filter 142. The input end of the LNA 150 is coupled to the output end O3, and the output end of the LNA 150 is coupled to the switch SW2. When the input end IN is coupled to the output end O1, the switch SW3 is turned on and the switches SW1 and SW2 are turned off, such that the trace 131, the band pass filter 148, and the switch SW3 form the first shunt path 121. When the input end IN is coupled to the output end O2, the switch SW1 is turned on and the switches SW2 and SW3 are turned off, such that the trace 132, the common band pass filter 142, and the switch SW1 form the second shunt path 122. When the input end IN is coupled to the output end O3, the switches SW1 and SW2 are turned on and the switch SW3 is turned off, such that the LNA 150, the switch SW2, the common band pass filter 142, and the switch SW1 form the third shunt path 123. In short, in the embodiment, the trace 131, the band pass filter 148 and the switch SW3 are formed on the first shunt path 121. The trace 132, the common band pass filter 142, and the switch SW1 are formed on the second shunt path 122. The LNA 150, the switch SW2, the common band pass filter 142, and the switch SW1 are formed on the third shunt path 123. The band pass filter 148 can be a low Q filter, and the band pass filter 142 can be a high Q filter. The first shunt path 121 is suitable for non-critical scenarios. The second shunt path 122 is suitable for critical scenarios when the wireless transceiver is in transmitter mode. The third shunt path 123 is suitable for critical scenarios when the wireless transceiver is in receiver mode. The gain of the LNA 150 can overcome the filter loss.

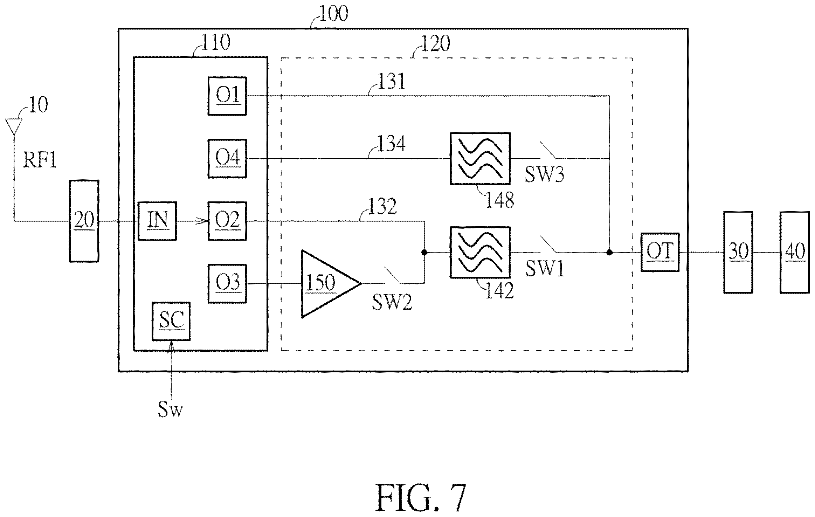

FIG. 7 is a schematic diagram of a wireless transceiver featuring the RF front-end circuit 100, according to another embodiment of the present invention. In the embodiment, the multi-way switch 110 is a four-way switch (i.e., SP4T) and comprises an input end IN, four output ends O1 to O4, and a control end SC. The input end IN is coupled to the antenna 10 and configured to receive RF signals (e.g., the RF signal RF1) from the antenna 10. The control end SC is configured to couple the input end IN to one of the output ends O1 to O4 according to the switch control signal Sw. The switch control signal Sw may be generated by a wireless device in which the RF front-end circuit 100 is integrated. The shunt circuit 120 comprises a trace 131, a switch SW3, a band pass filter 148, a trace 134, a switch SW1, a common band pass filter 142, a trace 132, a switch SW2, and a low noise amplifier (LNA) 150. The trace 131 is coupled between the output end O1 and the output terminal OT. The band pass filter 148 is coupled between the output end O4 and the output terminal OT via the trace 134 and the switch SW3. The common band pass filter 142 is coupled between the trace 132 and the switch SW1. The trace 132 is coupled between the output end O2 and the common band pass filter 142. The input end of the LNA 150 is coupled to the output end O3, and the output end of the LNA 150 is coupled to the switch SW2. When the input end IN is coupled to the output end O1, the switches SW1, SW2 and SW3 are turned off, such that the trace 131 serves as the first shunt path 121 (i.e., a bypass path). When the input end IN is coupled to the output end O2, the switch SW1 is turned on and the switches SW2 and SW3 are turned off, such that the trace 132, the common band pass filter 142, and the switch SW1 form the second shunt path 122. When the input end IN is coupled to the output end O3, the switches SW1 and SW2 are turned on and the switch SW3 is turned off, such that the LNA 150, the switch SW2, the common band pass filter 142, and the switch SW1 form the third shunt path 123. When the input end IN is coupled to the output end O4, the switches SW1 and SW2 are turned off and the switch SW3 is turned on, such that the trace 134, the band pass filter 148, and the switch SW3 form a fourth shunt path of the shunt circuit 120. The common band pass filter 142 has a first Q factor and has fourth rejection to the RF signal RF1. The band pass filter 148 has a second Q factor and has fifth rejection to the RF signal RF1. In an embodiment, the second Q factor is less than the first Q factor. In another embodiment, the second Q factor is greater than the first Q factor. In an embodiment, the fourth rejection is less than the fifth rejection. In another embodiment, the fourth rejection is greater than the fifth rejection.

In summary, this invention proposes an adaptive RF front-end design for the WLAN system. This design integrates the RF filter(s) with the RF front-end circuit, providing a joint RF switch capability tailored to different coexistence scenarios. With this adaptive switch strategy, a path through a filter may be selected for the critical scenarios, while a bypass path may be chosen to reduce insertion loss for the non-critical scenarios. This proposed approach also reduces cost and design complexity, making it a more efficient solution.

It should be appreciated that the words "first," "second," "third," "fourth," etc., are used in the claims and descriptions for the purpose of identifying and distinguishing between elements having the same base name. These words are not intended to indicate a particular order or physical orientation of the elements. Likewise, these words are not intended to indicate a specific temporal relationship between elements. In the claims, the words will typically be assigned in the order that elements are introduced, which may not be the same as the order assigned in the description.

Certain terms are used throughout the description and following claims to refer to particular elements. As one skilled in the art will understand, electronic equipment manufacturers may refer to an element by different names. This document does not intend to distinguish between elements that differ in name but not function. In the following description and in the claims, the terms "comprise", "include" and "have" are used in an open-ended fashion, and thus should be interpreted to mean "include, but not limited to".

The direction terms used in the following embodiment such as up, down, left, right, in front of or behind are just the directions referring to the attached figures. Thus, the direction terms used in the present disclosure are for illustration, and are not intended to limit the scope of the present disclosure. It should be noted that the elements which are specifically described or labeled may exist in various forms for those skilled in the art. Besides, when a layer is referred to as being "on" another layer or substrate, it may be directly on the other layer or substrate, or may be on the other layer or substrate, or intervening layers may be included between other layers or substrates.

Besides, relative terms such as "lower" or "bottom", and "higher" or "top", "above" or "below" may be used in embodiments to describe the relative relation of an element to another element labeled in figures. It should be understood that if the labeled device is flipped upside down, the element in the "lower" side may be the element in the "higher" side.

The terms of approximation, such as "generally" and "substantially," are descriptive terms used herein to avoid a strict numerical boundary to the specified parameter and are generally interpreted as being within a certain given value or range.

In the foregoing detailed description, various features of the invention are grouped together in one or more embodiments for the purpose of streamlining the disclosure. This method of disclosure is not to be interpreted as reflecting an intention that the claimed invention requires more features than are expressly recited in each claim. Rather, as the following claims reflect, inventive aspects may lie in less than all features of each disclosed embodiment.

Those skilled in the art will readily observe that numerous modifications and alterations of the device and method may be made while retaining the teachings of the invention. Accordingly, the above disclosure should be construed as limited only by the metes and bounds of the appended claims.

The present invention may also be defined by the following numbered clauses.
1. A radio frequency (RF) front-end circuit, comprising:
   a multi-way switch, comprising:
      an input end, coupled to an antenna and configured to receive a radio frequency signal from the antenna;
      a plurality of output ends; and
      a control end, configured to couple the input end to one of the output ends according to a switch control signal; and an output terminal; and
   a shunt circuit, coupled between the multi-way switch and the output terminal;
   wherein when the input end of the multi-way switch is coupled to a first output end of the output ends of the multi-way switch, the shunt circuit provides a first shunt path between the first output end and the output terminal with first rejection to the radio frequency signal;
   wherein when the input end of the multi-way switch is coupled to a second output end of the output ends of the multi-way switch, the shunt circuit provides a second shunt path between the second output end and the output terminal with second rejection to the radio frequency signal, and the second rejection is greater than the first rejection; and
   wherein when the input end of the multi-way switch is coupled to a third output end of the output ends of the multi-way switch, the shunt circuit provides a third shunt path between the third output end and the output terminal with third rejection to the radio frequency signal, and the third rejection is greater than the second rejection.
2. The RF front-end circuit of clause 1, wherein the shunt circuit comprises:
   a common band pass filter having a first end coupled to the output terminal;
   a trace, coupled between the second output end and a second end of the common band pass filter; and
   a low noise amplifier, coupled between the third output end and the second end of the common band pass filter.
3. The RF front-end circuit of clause 2, wherein the shunt circuit further comprises:
   a first switch, coupled between the common band pass filter and the output terminal; and
   a second switch, coupled between the low noise amplifier and the common band pass filter.
4. The RF front-end circuit of clause 2, wherein the first shunt path is a bypass path, the trace and the common band pass filter are formed on the second shunt path, and the low noise amplifier and the common band pass filter are formed on the third shunt path.
5. The RF front-end circuit of clause 2, wherein the shunt circuit further comprises:
   a band pass filter, coupled between a fourth output end of the output ends of the multi-way switch and the output terminal.
6. The RF front-end circuit of clause 5, wherein the common band pass filter has a first Q factor, and the band pass filter has a second Q factor less than the first Q factor.
7. The RF front-end circuit of clause 5, wherein the common band pass filter has a first Q factor, and the band pass filter has a second Q factor greater than the first Q factor.
8. The RF front-end circuit of clause 5, wherein the common band pass filter has fourth rejection to the radio frequency signal, the band pass filter has fifth rejection to the radio frequency signal, and the fourth rejection is less than the fifth rejection.
9. The RF front-end circuit of clause 5, wherein the common band pass filter has fourth rejection to the radio frequency signal, the band pass filter has fifth rejection to the radio frequency signal, and the fourth rejection is greater than the fifth rejection.
10. The RF front-end circuit of clause 5, wherein the shunt circuit further comprises:
   a first switch, coupled between the common band pass filter and the output terminal;
   a second switch, coupled between the low noise amplifier and the common band pass filter; and
   a third switch, coupled between the band pass filter and the output terminal.
11. The RF front-end circuit of clause 10, wherein the first shunt path is a bypass path, the trace and the common band pass filter are formed on the second shunt path, and the low noise amplifier and the common band pass filter are formed on the third shunt path.
12. The RF front-end circuit of clause 1, wherein the shunt circuit comprises:
   a first band pass filter, coupled between the second output end and the output terminal;
   a low noise amplifier, having an input end coupled to the third output end; and
   a second band pass filter, coupled between an output end of the low noise amplifier and the output terminal.
13. The RF front-end circuit of clause 12, wherein the shunt circuit further comprises:
   a first switch, coupled between the first band pass filter and the output terminal; and
   a second switch, coupled between the second band pass filter and the output terminal.
14. The RF front-end circuit of clause 12, wherein the first shunt path is a bypass path, the first band pass filter is formed on the second shunt path, and the low noise amplifier and the second band pass filter are formed on the third shunt path.
15. The RF front-end circuit of clause 1, wherein the shunt circuit comprises:
   a band pass filter, coupled between the first output end and the output terminal;
   a common band pass filter having a first end coupled to the output terminal;
   a trace, coupled between the second output end and a second end of the common band pass filter; and
   a low noise amplifier, coupled between the third output end and the second end of the common band pass filter.
16. The RF front-end circuit of clause 15, wherein the shunt circuit further comprises:
   a first switch, coupled between the common band pass filter and the output terminal;
   a second switch, coupled between the low noise amplifier and the common band pass filter; and
   a third switch, coupled between the band pass filter and the output terminal.
17. The RF front-end circuit of clause 15, wherein the band pass filter is formed on the first shunt path, the trace and the common band pass filter are formed on the second shunt path, and the low noise amplifier and the common band pass filter are formed on the third shunt path.
18. The RF front-end circuit of clause 1, wherein the first shunt path is a bypass path.

## Claims

1. A radio frequency, RF, front-end circuit (100), comprising:
a multi-way switch (110), comprising:
an input end, coupled to an antenna (10) and configured to receive a radio frequency signal from the antenna (10);
a plurality of output ends; and
a control end, configured to couple the input end to one of
the output ends according to a switch control signal; and an output terminal; and
a shunt circuit (120), coupled between the multi-way switch (110) and the output terminal;
wherein when the input end of the multi-way switch (110) is coupled to a first output end of the output ends of the multi-way switch (110), the shunt circuit (120) provides a first shunt path (121) between the first output end and the output terminal with first rejection to the radio frequency signal;
wherein when the input end of the multi-way switch (110) is coupled to a second output end of the output ends of the multi-way switch (110), the shunt circuit (120) provides a second shunt path (122) between the second output end and the output terminal with second rejection to the radio frequency signal, and the second rejection is greater than the first rejection; and
wherein when the input end of the multi-way switch (110) is coupled to a third output end of the output ends of the multi-way switch (110), the shunt circuit (120) provides a third shunt path (123) between the third output end and the output terminal with third rejection to the radio frequency signal, and the third rejection is greater than the second rejection.

2. The RF front-end circuit (100) of claim 1, wherein the shunt circuit (120) comprises:
a common band pass filter (142) having a first end coupled to the output terminal;
a trace (132), coupled between the second output end and a second end of the common band pass filter (142); and
a low noise amplifier (150), coupled between the third output end and the second end of the common band pass filter (142).

3. The RF front-end circuit (100) of claim 2, wherein the shunt circuit (120) further comprises:
a first switch (SW1), coupled between the common band pass filter (142) and the output terminal; and
a second switch (SW2), coupled between the low noise amplifier (150) and the common band pass filter (142).

4. The RF front-end circuit (100) of claim 2, wherein the first shunt path (121) is a bypass path, the trace (132) and the common band pass filter (142) are formed on the second shunt path (122), and the low noise amplifier (150) and the common band pass filter (142) are formed on the third shunt path (123).

5. The RF front-end circuit (100) of claim 2, wherein the shunt circuit (120) further comprises:
a band pass filter (148), coupled between a fourth output end of the output ends of the multi-way switch (110) and the output terminal.

6. The RF front-end circuit (100) of claim 5, wherein the common band pass filter (142) has a first Q factor, and the band pass filter (148) has a second Q factor less than the first Q factor; or wherein the common band pass filter (142) has a first Q factor, and the band pass filter (148) has a second Q factor greater than the first Q factor.

7. The RF front-end circuit (100) of claim 5, wherein the common band pass filter (142) has fourth rejection to the radio frequency signal, the band pass filter (148) has fifth rejection to the radio frequency signal, and the fourth rejection is less than the fifth rejection; or wherein the common band pass filter (142) has fourth rejection to the radio frequency signal, the band pass filter (148) has fifth rejection to the radio frequency signal, and the fourth rejection is greater than the fifth rejection.

8. The RF front-end circuit (100) of claim 5, wherein the shunt circuit (120) further comprises:
a first switch (SW1), coupled between the common band pass filter (142) and the output terminal;
a second switch (SW2), coupled between the low noise amplifier (150) and the common band pass filter (142); and
a third switch (SW3), coupled between the band pass filter (148) and the output terminal.

9. The RF front-end circuit (100) of claim 8, wherein the first shunt path (121) is a bypass path, the trace (132) and the common band pass filter (142) are formed on the second shunt path (122), and the low noise amplifier (150) and the common band pass filter (142) are formed on the third shunt path (123).

10. The RF front-end circuit (100) of claim 1, wherein the shunt circuit (120) comprises:
a first band pass filter (144), coupled between the second output end and the output terminal;
a low noise amplifier (150), having an input end coupled to the third output end; and
a second band pass filter (146), coupled between an output end of the low noise amplifier (150) and the output terminal.

11. The RF front-end circuit (100) of claim 10, wherein the shunt circuit (120) further comprises:
a first switch(SW1), coupled between the first band pass filter (144) and the output terminal; and
a second switch (SW2), coupled between the second band pass filter (146) and the output terminal.

12. The RF front-end circuit (100) of claim 10, wherein the first shunt path (121) is a bypass path, the first band pass filter (144) is formed on the second shunt path (122), and the low noise amplifier (150) and the second band pass filter (146) are formed on the third shunt path (123).

13. The RF front-end circuit (100) of claim 1, wherein the shunt circuit (120) comprises:
a band pass filter (148), coupled between the first output end (01) and the output terminal;
a common band pass filter (142) having a first end coupled to the output terminal;
a trace (132), coupled between the second output end and a second end of the common band pass filter (142); and
a low noise amplifier (150), coupled between the third output end and the second end of the common band pass filter (142).

14. The RF front-end circuit (100) of claim 13, wherein the shunt circuit (120) further comprises:
a first switch (SW1), coupled between the common band pass filter (142) and the output terminal;
a second switch (SW2), coupled between the low noise amplifier (150) and the common band pass filter (142); and
a third switch (SW3), coupled between the band pass filter (148) and the output terminal.

15. The RF front-end circuit (100) of claim 13, wherein the band pass filter (148) is formed on the first shunt path (121), the trace (132) and the common band pass filter (142) are formed on the second shunt path (122), and the low noise amplifier (150) and the common band pass filter (142) are formed on the third shunt path (123).
